# EUROPEAN PATENT APPLICATION

(11) **EP 1 454 954 A1**
(43) Date of publication of application: **08.09.2004**
(21) Application number: 02801506.3
(22) Date of filing: 09.10.2002
(51) Int. Cl.: C08L 27/16

(54) **WIRE COATING POLYMER COMPOSITION**

(30) Priority: 15.10.2001 JP 2001316281
(71) Applicant: Kureha Chemical Industry Company, Limited, Tokyo 103-8552 (JP)
(72) Inventor: MIZUNO, Toshiya, Tuchiura-shi, Ibaraki 300-0031 (JP); AKATSU, Masamichi, Niihari-gun, Ibaraki 315-0053 (JP); TERASHIMA, Hisaaki, Ishioka-shi, Ibaraki 315-0035 (JP); KATSURAO, Takumi, Iwaki-shi, Fukushima 971-8171 (JP); HORIE, Katsuo, Iwaki-shi, Fukushima 974-0144 (JP)
(74) Representative: Held, Stephan, Dr.rer.nat., Dipl.-Chem.
(86) International application number: PCT/JP2002/010458
(87) International publication number: WO 2003/033588

(57) **Abstract**

As a polymer composition for electrical wire coating is provided a vinylidene fluoride polymer composition, which has such heat-resistance as to withstand the heat generated from a wire in service and exhibits satisfactory flexibility even after the change with the passage of time.

The polymer composition for electrical wire coating comprises a vinylidene fluoride copolymer and a vinylidene fluoride homopolymer. The preferable compounding ratio in the polymer composition is in the range of 20 to 80% by weight of a vinylidene fluoride copolymer and 80 to 20% by weight of a vinylidene fluoride homopolymer. The vinylidene fluoride copolymer is preferably one comprising 95 to 70% by weight of vinylidene fluoride and 5 to 30% by weight of a monomer copolymerizable with vinylidene fluoride.

## Description

### Technical Field

The present invention is concerned in a polymer composition for wire coating, and relates to a polymer composition having high heat-resistance and flexibility suitable for use as electrical wire coating, as well as a coated electrical wire comprising a wire coated with said polymer composition.

### Background Art

It is required for a polymer composition used as electrical wire coating to have such heat resistance as to withstand the heat generated from a wire in service. It is also essential for the polymer composition to have satisfactory flexibility even after the change with the passage of time. Poly(vinylidene fluoride) has been used as a coating material for electrical wires because it is excellent in low flammability, heat-resistance, weather-resistance, cut-through resistance and so on. But it has problems with its mechanical properties such as high modulus of elasticity, inferior flexibility and widely variable elongation at break. As a means to solve these problems, addition of plasticizer or copolymerization has been proposed. However, although poly(vinylidene fluoride), to which plasticizer is added, has superior initial properties, it has such problems that the plasticizer bleeds and the mechanical properties deteriorate as the time proceeds. On the other hand, although a copolymerized vinylidene fluoride is able to gain optional mechanical properties by selecting the composition ratio properly and it has stability over time. But it has a problem that lowering of the heat-resistance is caused as found that the melting point falls.

The present invention has been performed in order to solve the above problems which have neither been solved by the addition of plasticizer to poly(vinylidene fluoride) nor by mere copolymerization of vinylidene fluoride, and in order to provide, as a polymer composition to be used as an electrical wire coating, a vinylidene fluoride polymer composition which has a heat-resistance that will withstand the heat generated from a wire in use and exhibits satisfactory flexibility even after the change with the passage of time.

### Disclosure of Invention

The present invention relates to a polymer composition for electrical wire coating, comprising a vinylidene fluoride copolymer and a vinylidene fluoride homopolymer.

Further, the present invention relates to a polymer composition for electrical wire coating, comprising 20 to 80% by weight of a vinylidene fluoride copolymer and 80 to 20% by weight of a vinylidene fluoride homopolymer.

Still further, the present invention relates to a polymer composition for electrical wire coating, comprising 40 to 60% by weight of a vinylidene fluoride copolymer and 60 to 40% by weight of a vinylidene fluoride homopolymer.

The vinylidene fluoride copolymer is defined as a copolymer comprising vinylidene fluoride and a monomer copolymerizable with vinylidene fluoride. When vinylidene fluoride is copolymerized with a monomer copolymerizable with it, the crystallinity of the vinylidene fluoride is disturbed, and as a result it gains flexibility, while a melting point of the copolymer falls and the heat-resistance deteriorates. The present inventors have found that a composition possessing a melting point high enough to be used as wire coating and also possessing sufficient flexibility can be obtained by mixing a vinylidene fluoride copolymer with a vinylidene fluoride homopolymer, and then they have attained to the present invention.

As the monomers copolymerizable with vinylidene fluoride; hydrocarbon monomers such as ethylene, propylene and so on, fluorine-containing monomers such as vinyl fluoride, trifluoroethylene, chlorotrifluoroethylene, tetrafluoroethylene, hexafluoropropylene, fluoroalkyl vinyl ether and so on can be enumerated, and not limiting to the above monomers, any monomer which can disturb the crystallinity of the copolymer can be used. Among the above-mentioned monomers, hexafluoropropylene, chlorotrifluoroethylene and tetrafluoroethylene are preferable. These monomers have a large tendency to disturb the crystallinity of the vinylidene fluoride copolymer, and thus the composition can easily gain flexibility.

The vinylidene fluoride copolymer employed in the present invention is preferably one comprising 95 to 70% by weight of vinylidene fluoride and 5 to 30% by weight of a monomer copolymerizable with vinylidene fluoride. When the ratio of the monomer copolymerizable with vinylidene fluoride is less than 5 %, it is insufficient to disturb the crystallinity of vinylidene fluoride. On the other hand, when the ratio of the monomer is more than 30% by weight, it becomes difficult to gain the mechanical properties as a vinylidene fluoride copolymer.

The polymer composition for wire coating in accordance with the present invention preferably comprises 20 to 80% by weight of a vinylidene fluoride copolymer and 80 to 20% by weight of a vinylidene fluoride homopolymer. When the compounding ratio of the vinylidene fluoride copolymer is less than 20% by weight, the polymer composition has insufficient flexibility to be used as electrical wire coating. When the compounding ratio of the vinylidene fluoride copolymer is more than 80% by weight, the composition has inferior heat-resistance. Moreover, when the compounding ratio of a vinylidene fluoride copolymer is 40 to 60% by weight, the melting point of crystal can be retained on a higher level, and also the remarkable flexibility can be gained. Consequently, more preferable compounding ratio is in the range of 40 to 60% by weight of a vinylidene fluoride copolymer and 60 to 40% by weight of a vinylidene fluoride homopolymer.

In general, a coating layer is formed on an electrical wire so that a polymer material in a molten state can be applied, with being solidified, to coat an electrical wire. Therefore, it is preferable that a polymer composition for electrical wire coating has a viscosity with which the process of coating is easily carried out. When a polymer composition is applied to coat an electrical wire in high velocity, the polymer composition is required to have a viscosity greater than a certain level. It is easy for the surface of the coating layer to become rough, if the viscosity is too high. Therefore it is preferable that the inherent viscosity of the vinylidene fluoride copolymer employed in the present invention is in the range of 0.8 to 2 dl/g and the inherent viscosity of the vinylidene fluoride homopolymer is also in the range of 0.8 to 2 dl/g. However, it is difficult to mix both of them, if they have a large difference in their polymerization degree from each other. Therefore, it is preferable that the difference in the inherent viscosity between the copolymer and the homopolymer is within 1 dl/g.

In the polymer composition for electrical wire coating, which comprises a vinylidene fluoride copolymer and a vinylidene fluoride homopolymer, in accordance with the present invention, it is also possible that the composition can be composed of not less than three types of polymers selected from the copolymers and homopolymers by compounding not less than two kinds of vinylidene fluoride copolymers having difference in their compositions or inherent viscosities, or by compounding not less than two kinds of vinylidene fluoride homopolymers having difference in their inherent viscosities.

In the polymer composition for electrical wire coating in accordance with the present invention, the addition of a cross-linking agent or irradiation of radiant ray may form cross-linking in the vinylidene fluoride, so that the heat resistance of the polymer composition can be further elevated. Other additives can be mixed if necessary, so far as the properties of the polymer composition for electrical wire coating of the present invention are not deteriorated.

For example, volume extension of the polymer composition comprising a vinylidene fluoride copolymer and a vinylidene fluoride homopolymer can be attempted by adding a resin which has good compatibility with the vinylidene fluoride resin, so as to realize the lowering of the cost. Hitherto it has been known that an acrylic resin has good compatibility with a vinylidene fluoride resin, but there is a problem that its property is unstable because the crystallinity changes with the passage of time after molding.

With regard to this, the present inventors have found that the problem can be solved by mixing a vinylidene fluoride resin with a resin containing principal chains of polyolefin having side chains of an acrylic vinyl polymer, which has good compatibility with a vinylidene fluoride resin. As the acrylic vinyl polymer; ethyl acrylate, methyl acrylate, glycydile acrylate, ethyl methacrylate, methyl methacrylate, glycydile methacrylate and so on are preferably employed, and it is desirable that the content of the acrylic vinyl polymer in the polymers is 20 to 80% by weight. Additionally, a block copolymer of polyolefin and an acrylic vinyl polymer can be employed in the same manner.

Furthermore, when a vinylidene fluoride resin is mixed with a resin containing principal chains of polyolefin having side chains of an acrylic vinyl polymer, the compatibility with the olefin is elevated, so that the extending effect by the addition of the olefin can also be attempted.

A coated electrical wire having high heat-resistance and good flexibility can be produced by coating a copper wire, and so on, with the polymer composition in accordance with the present invention in usual manners.

### Brief Description of Drawings

Fig. 1 is a graph showing the dependence of the melting point of crystal of the polymer composition upon the compounding amount (% by weight) of a vinylidene fluoride copolymer in the polymer composition comprising a vinylidene fluoride copolymer and a vinylidene fluoride homopolymer.
Fig. 2 is a graph showing the dependence of the bending modulus of elasticity at special deflection of the polymer composition upon the compounding amount (% by weight) of a vinylidene fluoride copolymer in the polymer composition comprising a vinylidene fluoride copolymer and a vinylidene fluoride homopolymer.

### Best Mode for Carrying Out the Invention

The present invention is explained in detail by the following examples and comparative examples. In the examples and the comparative examples, the property values of the polymer and the property evaluation of the polymer composition were measured as follows:

### (1) Inherent Viscosity

Inherent viscosity was employed as the standard for the molecular weight of the polymers. Logarithmic viscosity of the solution, which contains 4 g of a vinylidene fluoride homopolymer or a vinylidene fluoride copolymer in 1 liter of N,N-dimethylformamide, was measured at a temperature of 30 °C.

### (2) Melting Point of Crystal (°C)

Sheet samples of the polymer composition were measured by using a DSC (differential scanning calorimeter) TA3000 produced by Mettler AG. in West Germany. The peak temperature of each sheet sample raised from room temperature, at the heating-rate of 10 °C/min., was determined as the melting point of crystal of the polymer composition.

### (3) Bending Modulus of Elasticity at Special Deflection (GPa)

Test pieces, which were 80 mm in length, 20 mm in width and 0.6 mm in thickness, were measured by using a tensile tester; Tensilon UTM-100 produced by Orientic Co., Ltd according to JIS K 7171. The measuring conditions were as follows: the measuring temperature was 23°C, the distance between fulcrums was 30 mm and the testing rate was 2 mm/min. The bending modulus of elasticity was measured at the time when the amount of deflection reached 1.5 times as much as the thickness of the test pieces (displacement: 0.9 mm). Five tests were carried out for each sheet sample, and the average of them was regarded as the bending modulus of elasticity at special deflection.

### (4) Elongation at break (%)

Each sheet sample was punched using a second dumb-bell of JIS to prepare test pieces of 60 cm in length for use as the samples for measurement. Then elongations of the samples were measured until the test pieces were broken on the condition of the measuring temperature of 23 °C and the tension rate of 50 mm/min. by using a tensile tester; Tensilon UTM-100 produced by Orientic Co. Ltd. Fifteen tests were carried out for each sample, and the average, the minimum value and the standard deviation of them were calculated.

In examples and comparative examples of the present invention, the vinylidene fluoride homopolymers and the vinylidene fluoride copolymer were prepared as follows:

### (Preparing of vinylidene fluoride homopolymer P1)

8013 g of ion exchanged water, 1.57 g of methyl cellulose, 114 g of ethyl acetate, 18.8 g of n-propylperoxydicarbonate and 3130 g of vinylidene fluoride were placed into an autoclave having a content volume of 10 liter, and were subjected to suspension copolymerization at 26 °C for 5.5 hours. Next, the temperature was raised to 40 °C and further suspension copolymerization was carried out for 12.5 hours. After completion of the polymerization, the surrey of the polymer was dehydrated, washed and dried at 80 °C for 20 hours, and then powder of the polymer was obtained. The polymerization percentage was 92 % and the inherent viscosity of the resultant polymer was 0.86 dl/g.

### (Preparing of vinylidene fluoride homopolymer P2)

8013 g of ion exchanged water, 1.57 g of methyl cellulose, 62.6 g of ethyl acetate, 18.8 g of n-propylperoxydicarbonate and 3130 g of vinylidene fluoride were placed into an autoclave having a content volume of 10 liter, and were subjected to suspension copolymerization at 26 °C for 5.5 hours. Next, the temperature was raised to 40 °C and further suspension copolymerization was carried out for 12.4 hours. After completion of the polymerization, the surrey of the polymer was dehydrated, washed and dried at 80 °C for 20 hours, and then powder of the polymer was obtained. The polymerization percentage was 91 % and the inherent viscosity of the resultant polymer was 1.00 dl/g.

### (Preparing of vinylidene fluoride copolymer C1)

7644 g of ion exchanged water, 1.95 g of methyl cellulose, 35.1 g of n-propylperoxydicarbonate, 2067 g of vinylidene fluoride and 468 g of hexafluoropropylene were placed into an autoclave having a content volume of 10 liter, and were subjected to suspension copolymerization at 28 °C for 3.8 hours. Then, 1365 g of vinylidene fluoride was added to them for about 11 hours in order to maintain the polymerization pressure. Moreover, after about 16 hours from the beginning of the polymerization, the temperature was raised to 40 °C, and suspension copolymerization was carried out for 20.7 hours in total. After completion of the polymerization, the surrey of the polymer was dehydrated, washed and dried at 80 °C for 20 hours, and then powder of the polymer was obtained. The polymerization percentage was 87 % and the inherent viscosity of the resultant polymer was 1.01 dl/g.

Each powder of homopolymer P1, P2 or copolymer C1 was melt-extruded respectively by using a single screw extruder to make rods of about 2 mmφ. After quenching, the rods were chopped to chips of about 3 mm in length to obtain pellets.

### [Example 1]

59% by weight of pellets of vinylidene fluoride homopolymer P1 were mixed with 41% by weight of pellets of vinylidene fluoride copolymer C1 at room temperature to obtain a mixture of pellets. A single screw extruder of 35 mmφ was equipped with a T-die having a width of 270 mm and a lip-clearance of 0.6 mm. Then, the above-mentioned mixture of pellets was melt-extruded at a die temperature of 230 °C, and casting was carried out by a cooling roll of a temperature of 80 °C to produce a sheet sample of 0.6 mm in thickness. The physical properties of the sample were measured and are shown in Table 1.

### [Example 2]

A sheet sample was produced in the same manner as in Example 1 except that the mixture of pellets was obtained by mixing 41% by weight of pellets of P1 with 59% by weight of pellets of C1 at room temperature, and physical properties of the sample were measured and are shown in Table 1.

### [Comparative Example 1]

A sheet sample was produced in the same manner as in Example 1 except that the mixture of pellets was obtained by mixing 59% by weight of pellets of vinylidene fluoride homopolymer P1 with 41% by weight of pellets of vinylidene fluoride homopolymer P2 at room temperature, without employing the vinylidene fluoride copolymer. Physical properties of the sample were measured and are shown in Table 1.

### [Comparative Example 2]

A sheet sample was produced in the same manner as in Example 1 except that single pellets of vinylidene fluoride copolymer C1 were employed, and physical properties of the sample were measured and are shown in Table 1.

**Table 1**

| Example No. | | | Example 1 | Example 2 | |
|---|---|---|---|---|---|
| Comparative Example No. | | Comparative Example 1 | | | Comparative Example 2 |
| Formation of Composition | Vinylidene fluoride Homopolymer P1 (% by weight) | 59 | 59 | 41 | 0 |
| | Vinylidene fluoride homopolymer P2 (% by weight) | 41 | 0 | 0 | 0 |
| | Vinylidene fluoride copolymer C1 (% by weight) | 0 | 41 | 59 | 100 |
| Melting Point of Crystal ( °C ) | | 177 | 175 | 174 | 147 |
| Bending Modulus of Elasticity at Special Deflection ( GPa ) | | 2.3 | 1.5 | 1.3 | 0.7 |
| Elongation at Breaking Point | | | | | |
| Average ( % ) | | 360 | 410 | 520 | - |
| Minimum Value ( % ) | | 130 | 270 | 510 | - |
| Standard Deviation | | 120 | 80 | 9 | - |

From Table 1, it can be observed that the sheets of Examples 1 and 2 exhibit high melting points of 170 °C or higher and have heat-resistance. Additionally, the sheets have large elongation at the breaking point as their mechanical properties and also have small standard deviation, which indicates that the sheets show stable elongation and have low bending moduli of elasticity and good flexibility. Therefore, it is found that the polymer composition is suitable to be used as coating material for electrical wires in both its thermal and mechanical properties.

In contrast, the sheet of Comparative Example 1, comprising the composition of the combination of vinylidene fluoride homopolymers without a vinylidene fluoride copolymer, has a high melting point. But this sheet has a high bending modulus of elasticity, insufficient flexibility, and it exhibits unstable elongation due to its smaller elongation at the breaking point as compared to those in Examples 1 and 2 and its large standard deviation.

Moreover, the sheet of Comparative Example 2, comprising a vinylidene fluoride copolymer alone, has a low melting point and insufficient heat-resistance to be used as coating material for electrical wires.

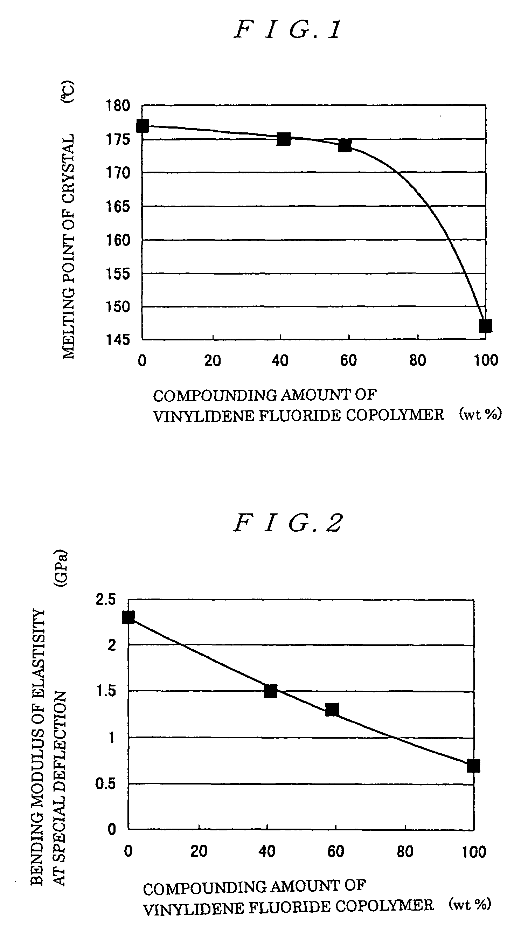

From the data of Table 1, a graph was produced by taking the compounding amount of the vinylidene fluoride copolymer (% by weight) as the axis of abscissas and the melting point of crystal (°C) as the axis of ordinates and is shown as Figure 1. Another graph was produced by taking the compounding amount of the vinylidene fluoride copolymer (% by weight) as the axis of abscissas and the bending modulus of elasticity at special deflection (GPa) as the axis of ordinates and is shown as Figure 2.

From the graph of Figure 2, it is found that the bending modulus of elasticity decreases almost linearly with increasing of the ratio of a vinylidene fluoride copolymer in the polymer composition comprising a vinylidene fluoride homopolymer and a vinylidene fluoride copolymer, and the compounding amount of the vinylidene fluoride copolymer is preferably not less than 20% by weight in order for the sheet to retain a low bending modulus of bending elasticity at special deflection, more preferably not less than 40% by weight for the lower level of the bending modulus of elasticity. On the other hand, from the graph of Figure 1, the melting point of crystal falls off abruptly at around 80% by weight of the vinylidene fluoride copolymer. Therefore, it is found that the compounding amount of a vinylidene fluoride copolymer is preferably not more than 80% by weight so that the sheet can gain a melting point of crystal of above a certain level. The compounding amount of a vinylidene fluoride copolymer is more preferably not more than 60% by weight especially to be certain to gain a higher melting point of crystal.

### [Example 3] (Test for electrical wire coating)

The mixture of pellets, the same as employed in Example 2, comprising 41% by weight of the pellets of P1 and 59% by weight of the pellets of C1, was applied to coat a cupper wire of 0.75 mmφ by an extrusion output of 11 g/min. and at an extruding temperature of 240 °C by using an extruder of 15 mmφ equipped with a nozzle for electrical wire coating. The rolling up rate was 20 m/min. and the coating thickness was about 250 µm.

After the thermal aging test at 160 °C for 240 hours, the resultant coated electrical wire was inspected, but no phenomenon such that the surface of the coating became rougher was observed, as compared with the surface before aging test. Further, when the wire was wound around a rod of 20 mmφ, the outside appearance of the coating surface showed no crack and exhibited no remarkable change. Therefore, it has been confirmed that the electrical wire coating having heat-resistance and flexibility can be obtained.

### [Example 4] (Test for electrical wire coating)

4 parts by weight of triallyl isocyanate as a cross-linking agent, 10 parts by weight of graft copolymer having principal chains of olefin and side chains of acryl vinyl polymer (produced by Nippon Yushi Co. Ltd, Registered Trademark: Modiper A5200) and 5 parts by weight of high density polyethylene (produced by Nippon Polyolefin Co. Ltd. Trade Name: J-REX HD) were added to 100 parts by weight of the mixture of pellets, the same as employed in Example 2, comprising 41% by weight of the pellets of P1 and 59% by weight of the pellets of C1, and the resultant mixture was kneaded by using a twin screw extruder, and then pelletized.

The resultant pellets were applied to coat a copper wire of 0.75 mm φ by an extrusion output of 11 g/min. and at an extrusion temperature of 240 °C by using an extruder of 15mmφ equipped with a nozzle for electrical wire coating. The rolling up rate was 20 m/min. and the coating thickness was about 250 µm. The resultant coated electrical wire was then subjected to cross-linking reaction treatment, being irradiated with radiant of 7 Mrad.

After the thermal aging test at 180 °C for 240 hours, the coated electrical wire treated as above was inspected, but no phenomenon such that the surface of the coating became rougher was observed, as compared with the surface before aging test. Further, when the wire was wound around a rod of 20 mmφ, the outside appearance of the coating surface showed no crack and exhibited no remarkable change. Therefore, it has been confirmed that the electrical wire coating having heat-resistance and flexibility can be obtained.

### [Example 5] (Test for electrical wire coating)

4 parts by weight of triallyl isocyanate as a cross-linking agent and 20 parts by weight of graft copolymer having principal chains of olefin and side chains of acryl vinyl polymer (produced by Nippon Yushi Co. Ltd, Registered Trademark: Modiper A5200) were added to 100 parts by weight of the mixture of pellets, the same as employed in Example 2, comprising 41% by weight of the pellets of P1 and 59% by weight of the pellets of C1, and the resultant mixture was kneaded by using a twin screw extruder, and then pelletized.

The resultant pellets were applied to coat a cupper wire of 0.75 mm φ by an extrusion output of 11 g/min. and at an extrusion temperature of 240 °C by using an extruder of 15mm φ equipped with a nozzle for electrical wire coating. The rolling up rate was 20 m/min. and the coating thickness was about 250 µm. The resultant coated electrical wire was then subjected to cross-linking reaction treatment, being irradiated with radiant of 7 Mrad.

After the thermal aging test at 180 °C for 240 hours, the coated electrical wire treated as above was inspected, but no phenomenon such that the surface of the coating became rougher was observed, as compared with the surface before aging test. Further, when the wire was wound around a rod of 20 mmφ, the outside appearance of the coating surface showed no crack and exhibited no remarkable change. Therefore, it has been confirmed that the electrical wire coating having heat-resistance and flexibility can be obtained.

### Industrial Applicability

The present invention provides polymer compositions having high heat-resistance and flexibility suitable for use as electrical wire coating, and coated electrical wires having high heat-resistance and superior flexibility can be obtained by coating electrical wires with said polymer compositions.

## Claims

1. A polymer composition for electrical wire coating, comprising a vinylidene fluoride copolymer and a vinylidene fluoride homopolymer.

2. A polymer composition for electrical wire coating, comprising 20 to 80% by weight of a vinylidene fluoride copolymer and 80 to 20% by weight of a vinylidene fluoride homopolymer.

3. A polymer composition for electrical wire coating, comprising 40 to 60% by weight of a vinylidene fluoride copolymer and 60 to 40% by weight of a vinylidene fluoride homopolymer.

4. A polymer composition for electrical wire coating as defined in any one of claims 1 to 3, wherein said vinylidene fluoride copolymer is one comprising 95 to 70% by weight of vinylidene fluoride and 5 to 30% by weight of a monomer copolymerizable with vinylidene fluoride.

5. A polymer composition for electrical wire coating as defined in any one of claims 1 to 4, wherein the inherent viscosity of the vinylidene fluoride copolymer is in the range of 0.8 to 2 dl/g, the inherent viscosity of the vinylidene fluoride homopolymer is in the range of 0.8 to 2 dl/g and the difference in the inherent viscosity between the copolymer and the homopolymer is within 1 dl/g.

6. A coated electrical wire comprising a wire coated with a polymer composition as defined in any one of claims 1 to 5.
